# EUROPEAN PATENT APPLICATION

(11) **EP 2 779 288 A1**
(43) Date of publication of application: **17.09.2014**
(21) Application number: 14158510.9
(22) Date of filing: 10.03.2014
(51) Int. Cl.: H01M 6/52, H01M 10/54

(54) **Process for the recovery of raw materials.**

(30) Priority: 11.03.2013 IT MI20130366
(71) Applicant: Societa Italiana Ambiente Ecologia S.r.l., 20030 Senago (MI) (IT)
(72) Inventor: Cauzzo, Marco, 20030 Senago MI (IT); Gullino, Cristian, 20030 Senago MI (IT)
(74) Representative: Pontiroli, Alessandro

(57) **Abstract**

The present invention relates to a process for the recovery of raw materials from WBA and a plant for said process.

## Description

The present invention relates to a process for the recovery of raw materials from WBA and a plant for said process.

Disposal of used and/or non-reusable batteries and charge accumulators (materials generally referred to as "waste batteries and accumulators" or "WBA") is a major environmental problem and represents a significant opportunity for the recovery of raw materials. In Italy, in order to promote a high level of collection and recycling, the collection, treatment, recycling and disposal of waste batteries and accumulators are regulated with reference to the European Directive 2006/66/EC and subsequent amendments and integrations transposed into Italian Legislative Decree no. 188/ 08 and EC and subsequent amendments and additions, which requires recovering / recycling WBA for environmental reasons.

The types of batteries and accumulators include portable batteries or accumulators, i.e. those that are sealed and that a normal person could carry by hand without difficulty, other than batteries, automotive batteries and industrial battery or accumulator, in accordance with the definitions of the same European Directive 2006/66/CE and associated legislation.

From the chemical point of view, as non-limiting examples, the WBA include waste from alkaline batteries, carbon zinc batteries, Zn - air battery (i.e., all the technology in zinc-manganese), Ni-Cd industrial and non-industrial accumulators, Nickel - Metal Hydride (Ni- Mh) technology industrial and non- industrial accumulators, Lithium Ion industrial and non- industrial accumulators, Lithium primary batteries and accumulators (all types, such as Lithium Iron phosphate), NaNi (nickel sodium) accumulators, sodium-sulfur batteries.

The regulations in force until 2013 required recovery of at least 50% by weight of the WBA.

The technologies currently available for the disposal of batteries are mainly based on wet treatments of the mass obtained after trituration of the WBA and separation of the ferromagnetic elements and other components such as paper, plastic, connectors etc. made of non-ferromagnetic materials. These treatments, so-called of hydrometallurgical type, involve the use of concentrated acids and/or bases, of an electrowinning step, which requires considerable electrical energy and a large amount of water,resulting in a significant environmental impact (eg, U.S. 5,575,907, EP1148571, EP1684369 and documents cited therein). Alternatively, WBA treatment methods of"pyrometallurgic"type are widespread, which are based on the use of ovens and high temperatures. Such methods yield poor percentage of material recovery, that is scarcely above the minimum percentage required by the law, entail a high consumption of energy and have a high environmental impact, also due to considerable amounts of polluting emissions. These processes are also not specific for the WBA, ie the WBA are added as"enrichment"or charge of mineral mixtures for the production of steels or other materials.

Aim of the present invention is to provide a process for the recovery of raw materials from the WBA which is efficient, economical and low environmental impact.

A task of the present invention is to provide a process for the recovery of raw materials from the WBA that, in addition to having a low environmental impact and a low cost, allows to recycle the largest part of the elements contained in the WBA.

Another task of the present invention is to provide a plant for the treatment of WBA and for the recovery of raw materials contained in them that is economical to build and to operate, efficient and of relatively simple construction.

In accordance with the present invention, these purposes, and others that will be better apparent hereinafter, are achieved by a process for the recovery of raw materials from batteries and accumulators of electric charge (WBA) comprising the steps of:
i. homogenizing a mass ("black mass") comprising non-ferromagnetic residues resulting from the treatment of WBA;
ii. entering the mass obtained in step i. in a redox chamber comprising oxygen in a percentage ranging from 20 to 24% in volume / total volume of the chamber;
iii. heating the mass in the redox chamber of step ii. at a temperature of 600 to 1300°C for 15 to 180 minutes under a stream of inert gas at a minimum flow rate of 1 L / h;
iv. increasing the flow of inert gas at a minimum flow rate of 2 L / h;
v. conveying the gaseous effluents exiting the oxidation chamber through at least an external line, maintained, at least in the parts that are closer to the oxidation chamber, at a temperature of 500 to 800°C, optionally using special heaters;
vi. conveying gaseous effluents of step v. to a pre- heated filter at a temperature of 500 to 800°C, wherein said pre-heated filter comprises an element capaable of retaining solid particles with a diameter greater than 1.2 microns;
vii. conveying gaseous effluents exiting the pre- filter of the passage vi. to a condenser selected from: I) a"smelter", obtaining a metal in liquid form, or II) an oxidation filter comprising a filter with hollow shape consisting essentially of a material that is inert and resistant to temperatures higher than 250°C, wherein said condenser is maintained under a stream of air or a mixture of air and oxygen in a percentage ranging between 20 and 40% volume / total volume, obtaining metal oxides in solid form;
viii. conveying the material obtained in step vii. (liquid metal in the case of the condenser smelter I, metal oxides in the case of the condenser II, in an appropriate container, and
ix. downloading the solids contained in the redoxchamber after the removal of the waste gases of step v.

These objects have also been achieved by a plant for the recovery of raw materials from batteries and accumulators of electric charge (WBA) according to the procedure described above, comprising at least the elements connected as follows:
a) a chamber comprising a redox cavity insulated and heatable to temperatures of 600 to 1300°C and comprising at least one inlet for the inert gas and an outlet for gaseous effluents;
b) a conveying line of the gaseous effluents which connects the chamber) and the pre-filter c) and which can be heated, at least in the part close to the chamber), to a temperature of 500 to 800°C by means of special heaters;
c) a prefilter heated to a temperature between 500 and 800°C and comprising an element suitable to retain solid particles with a diameter greater than 1.2 microns;
d) a condenser connected to the pre-filter c) through a line, heated or insulated so as to maintain the gas passage between c) and d) at a temperature of 500 to 800°C, wherein said condenser is selected from:
   I. a"smelter", capable of condensing the metal element content of the gaseous effluent from the pre-filter c) in the form of metal in the liquid phase, or
   II) an oxidation filter comprising a filter in the hollow shape in a material that is inert and resistant to temperatures above 250°C comprising an inlet for air or for a gaseous mixture comprising oxygen, which is capable of transforming the metal element content in the gaseous effluent from the pre- filter c) into zinc oxides of in solid form.

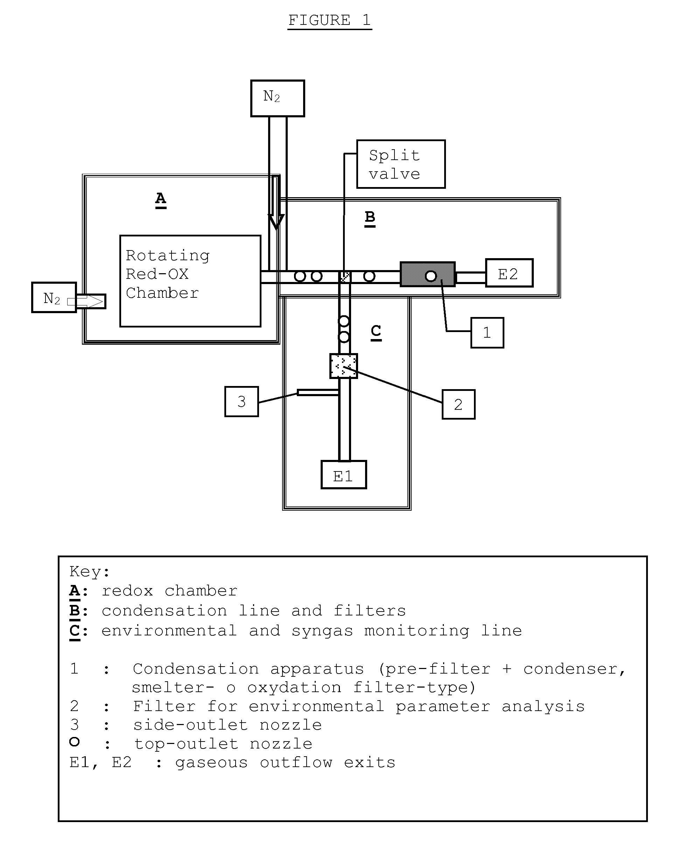

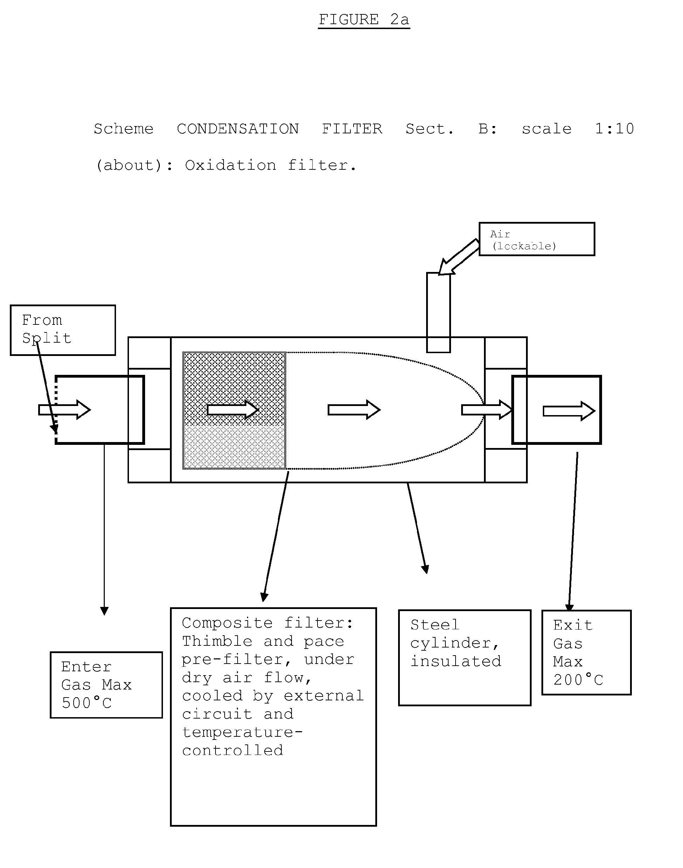

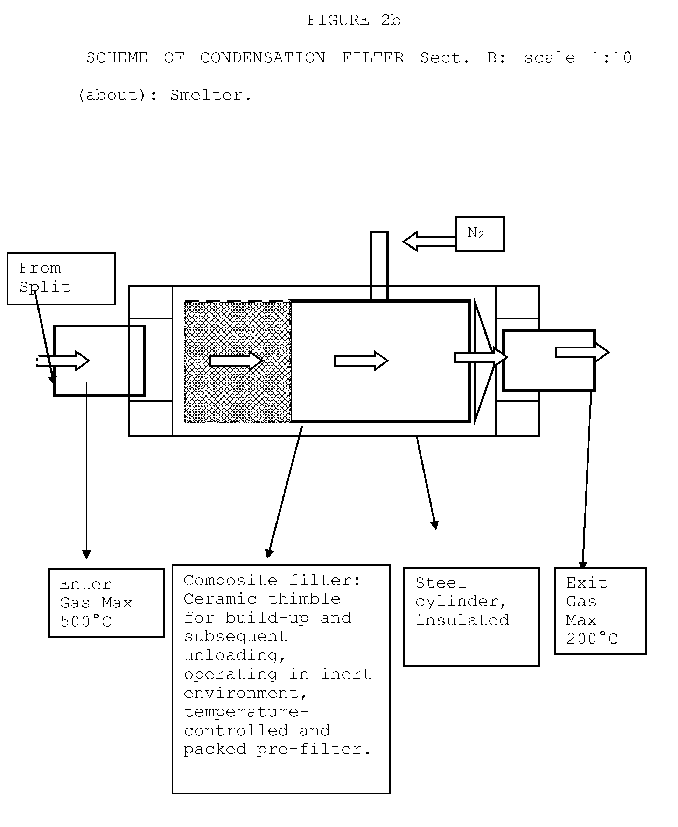

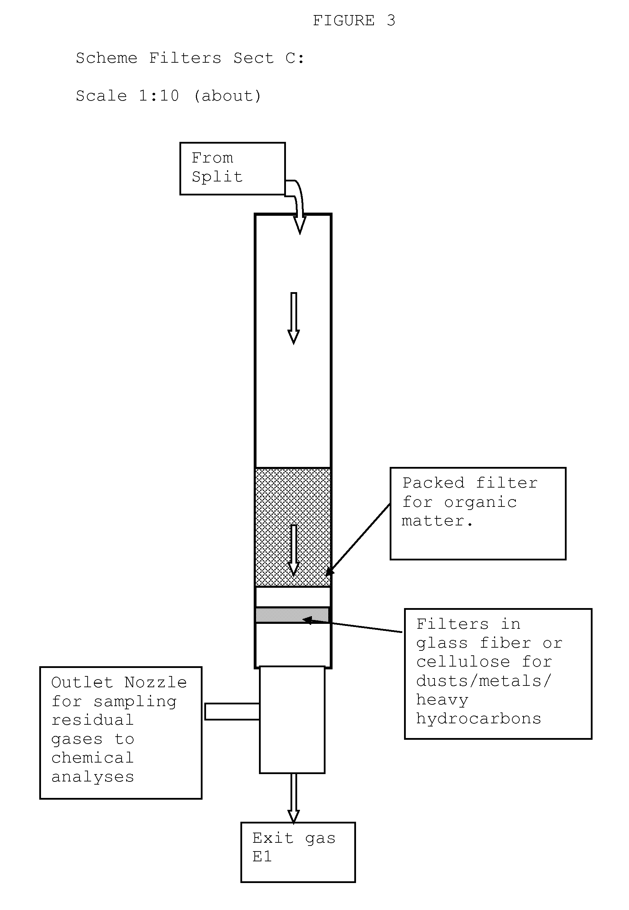

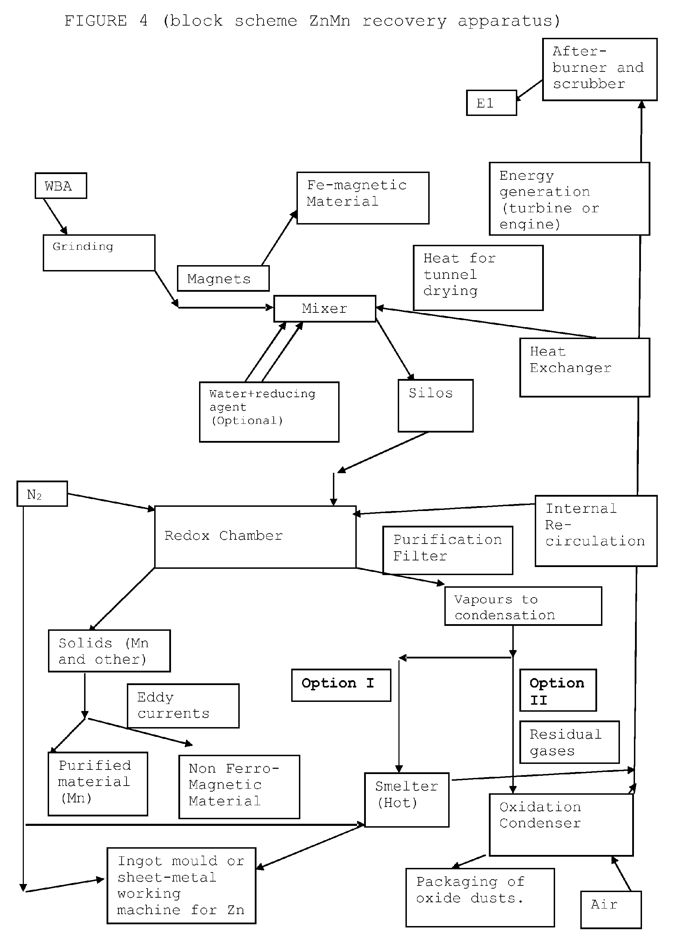

### FIGURE 1-4

Figure 1: Top view of the system according to the invention on a pilot scale (approximately 1:20).
Figure 2a: Scheme of the composite filter in part b) pilot-scale plant according to the invention (if filter by oxidation).
Figure 2b: Schematic of the composite filter in part b) of the pilot-scale plant according to the invention (smelter).
Figure 3: Diagram of the filter in part c) of the plant according to the invention
Figure 4: Block diagram of the system according to the invention on industrial scale (Zn and Mn recovery plant).

As used in the context of the present invention, the term"black mass"indicates the residue obtained after trituration of WBA, removal of ferromagnetic material, such as the casing of the batteries and accumulators and other parts ferromagnetic metal, through magnetic separators, otionally after washing with water and/or bases / acids / buffers, and drying, for example, through a heated tunnel. As used in the present invention, the term"black mass", in addition to the components of the paste of the batteries and accumulators, may also comprise materials such as plastics, paper, carbon, inorganic and organic materials etc..

In the context of the present invention, "battery" or "accumulator" means a source of electrical energy generated by direct conversion of chemical energy and consisting of one or more primary (non-rechargeable) elements or consisting of one or more secondary (rechargeable) elements. Non-limiting examples of battery or accumulator in this area are a"battery pack" (a set of batteries or accumulators that are connected to each other as a single unit or enclosed in an outer envelope that is not intended to be torn or opened by the user), portable batteries or accumulators (batteries, button cells, battery pack or sealed accumulators, hand-carriable and do not constitute industrial batteries or accumulators, or batteries or accumulators for vehicles),"button cells" (small portable batteries or accumulators round in shape with a diameter greater than height, used for special purposes such as hearing aids, watches, small portable equipment and back-up power), batteries or accumulators for vehicles (battery or accumulator used for automotive starter, lighting or ignition power of non-electric vehicles) and industrial battery or accumulator"(designed for exclusively industrial or professional uses or used in any type of electric vehicle).

Bbatteries or accumulators waste are batteries and accumulators which the holder discards or intends or is required to discard, generally after use.

The term "smelter" indicates a device that allows the immediate condensation of a metallic element in vapor phase in the metallic form of the metal in the liquid phase. Non-limiting examples of metals which can be condensed with said smelter are Zn, Cd, Na, Bi, Sb, Sn and Mg. Said apparatus comprises a container, which is heatable and/or capable of operating at temperatures between 300 and 800°C and insulated, built in steels that do not release pollutants such as Co, Ni or other heavy metals, optionally lined with at least one inert material, as a ceramic material, and maintained in an inert atmosphere (preferably nitrogen) in order to exclude almost totally the presence of oxygen and to keep the metal collected pure and virtually free of surface oxide. The "smelter" also includes an output, optionally blanketed with an inert gas (preferably nitrogen), that allows to pour the thus obtained liquid metal in an ingot-shaped mould or in a sheet metal working machine. Apparatus of this type, when measures to avoid oxidation of the metal in the cooling (eg. with nitrogen inerting of the sheet metal working machine) are applied, allow to obtain the metals in liquid form with a purity of at least between 97 and 99%, or higher.

If not otherwise specified, in the present invention the percentages are referred to the weight of a component on the total weight of the composition.

The flow rate of the inert gases in the various stages of the process can be adjusted according to the volume and the shape of the chamber and of the lines of the specific plant, as known to the skilled person and easily achievable through routine tests.

In one aspect, the present invention relates to a process for the recovery of raw materials from waste of batteries and accumulators of electric charge (WBA) comprising the steps of:
i. homogenizing a mass ("black mass") comprising non-ferromagnetic residues resulting from the treatment of WBA;
ii. entering the mass obtained in step i. into a redox chamber comprising oxygen in 20 to 24% in volume / volume of the chamber;
iii. heating the mass in the redox chamber of step ii. at 600 to 1300°C for 15 to 180 minutes under a stream of inert gas at a minimum flow rate of 1 L/h;
iv. increasing the flow of inert gas to a minimum flow rate of 2 L/h;
v. conveying the gaseous effluents exiting the oxidation chamber through external lines, maintained, at least in the parts that are closer to the oxidation chamber, at 500 to 800°C, optionally by means of dedicated heaters;
vi. conveying the gaseous effluents of step v. to a prefilter pre-heated at 500 to 800°C and comprising an element capable of retaining solid particles with a diameter greater than 1.2 microns;
vii. conveying the gaseous effluents exiting the pre-filter of passage vi. to a condensing element selected from: I) a "smelter", to obtain a metal in liquid form, or II) an oxidation filter comprising a filter in a hollow shape, in a material that is inert and resistant to temperatures above 250°C, maintained under a stream of air or of a mixture of air and oxygen in a percentage from 20 to 40% volume/volume, obtaining metal oxides in solid form;
viii. conveying the material obtained in step vii., that is liquid metal in the case of the smelter of point I or solid metal oxides in the case of the filter of point II, to an appropriate container, and
ix. downloading the solid residue remaining in the redox chamber after the removal of the gaseous effluents of step v.

The process according to the invention allows the recovery of raw materials from different types of WBA. As non-limiting examples, the process of the invention can be applied to WBA waste batteries and accumulators containing alkaline, Ni-Cd, NaS, Na -Ni, and Ni - Mh batteries. Preferably, the process according to the invention is applied to WBA comprising residues of alkaline batteries (ZnMn-type).

The process according to the invention allows the recovery of zinc and manganese, which represent 88% by weight of the ZnMn-type WBA, with very high efficiency.

The process may also allow the recovery of other elements, such as, by way of non-limiting example, Cd, Sn, Na, Sn, Bi, Sb and Mg and, from the dry residue, Al, Ni, Ag, Co, La and/or other rare earths.

Advantageously, during the process syngas is generated, that is a mixture of gases, essentially comprising carbon monoxide (CO) and hydrogen (H₂), with the presence, in variable quantities, of methane (CH₄) and carbon dioxide (CO₂). The production of syngas during the process of the invention allows the reduction of zinc from Zn²⁺ to metallic zinc in the form of steam at much lower temperatures compared to known processes.

Such Syngas is also useful for the self-maintenance of the amount of heat inside the redox chamber, as its partial combustion allows maintaining the nominal caloric contribution without the addition of external fuels. This feature provides lower consumption of energy from external power supply compared to known techniques.

A further factor of thermal increase derive from the feature that the non-ferrous metals magnetic remaining in a certain amount inside the mass also conduct heat. Since these metallic materials are homogeneously dispersed within the mass, they improve (especially in the presence of a constant rotation) the uniformity of thermal distribution in the whole mass, which then reacts at relatively low temperatures.

Preferably, the heating time of the step iii is from 30 to 120 minutes, more preferably from 60 to 90 minutes.

Preferably, the "Black Mass", in addition to the components of the paste of the batteries and accumulators, also comprises materials such as plastic, paper, carbon, inorganic and organic materials etc.. Advantageously, in the process according to the invention, these materials must not necessarily be removed. In fact, their presence contributes to making the process efficient even at relatively low temperatures.

Moreover, generally the heat needed for running the process is generated by the process itself and it may not be necessary to heat the line of step v.

Preferably, in step i. of the process according to the invention a reducing agent is added to the mass comprising non-ferromagnetic residues resulting from the treatment of the WBA.

More preferably, in the process according to the invention, said reducing agent of step i. is selected from coke, CO (gas), graphite, carbon-based materials similar or mixtures thereof. Preferably, the mass ("black mass") of passage i. is obtained by grinding WBA and separating the ferromagnetic material through a magnetic separator.

Preferably, in the process according to the invention the mass obtained in step i. is placed in a rotating element inside the redox chamber. The presence of a rotating element is particularly advantageous because the process is more efficient when applied to a mass that is homogeneous and uniformly heated. In addition, the movement of the mass inside the chamber redox enhances the release of the syngas and the penetration of the inert gas in the whole mass.

No additional oxygen is provided inside the redox chamber. Preferably, in the redox chamber the initial content of oxygen is non-stoichiometric. Generally, the content of oxygen in the chamber at the beginning of step ii. may correspond to the content of oxygen normally present in the air. Indeed, it was found that it is advantageous to keep the environment in which the reaction takes place as inert as possible, i.e. without adding air. Therefore, from the beginning of step iii. of the process an inert gas is introduced, at constant volumes, inside the chamber, as well as in the rotating element, if present.

The purpose of this addition is twofold: in the first place, this flow of inert gas acts as a carrier gas, in order to convey outside the gas mixture (Syngas and vapor) from the reaction products. The second purpose is that, in the presence of a rotating element, the flow of inert gas allows a constant heat distribution throughout the rotating mass within the rotating element itself, enhancing thermal uniformity and increasing thermal conductivity.

The inert gas can be nitrogen, argon or another noble gas. Preferably, the inert gas is nitrogen.

The vapors and gases that exit the oxidation chamber are conveyed to the external output by a further flow of nitrogen in order to keep them inert and to avoid contamination. Condensation of such gases at the exit should be avoided, in order not to impair the recovery percentages. The first lines of the external chamber of reduction / oxidation are heated, optionally by special heaters, at temperatures from 500 to 800°C, in order to avoid condensations of any kind and type.

The mixture of hot and dry gases in output is sent to a filter and to a condenser (composed of more specific sections and adapted to the intended operations), in succession, below 600°C (from 100 to 500°C). Advantageously, these temperatures make it possible to condense the zinc in the gas flow and to purify it from any low-melting metals and pollutants (such as, for alkaline batteries, mercury, cadmium, etc., present in small quantities). This section of the plant, indicated as condensation filter, is composed of two parts with specific activity, namely: a pre-heated filter which contains, preferably, at least one of activated carbons or silica gel or diatomaceous earth or mixtures thereof as a filter element, the purpose of which is to retain impurities or pollutants, and the actual condenser, which can be of two types.
I) Smelter: a device that allows the immediate condensation of a metal in a gaseous form to metal in liquid form, and that consists of a special heated and insulated container, built in steel that does not release pollutants and in an inert atmosphere (no oxygen), in order to obtain a liquid metal as pure as possible (e.g. 97 to 99%). The smelter used in the process according to the invention further comprises an output for liquids that is blanketed with nitrogen, which allows to pour the liquid metal in an ingot-shaped mould or in a sheet metal-working machine. Preferably, the smelter is a zinc smelter when using ZnMn-type WBA.
II) Oxidation filter: an apparatus, in which the metal vapors are collected and oxidized. Such apparatus comprises a filter with an hollow shape, made of a material that is almost inert and resistant to high temperatures, which is abundantly aerated (adding "dry" air, that is dehumidified air, or a mixture of air and oxygen wherein oxygen is not more than 40% volume / total volume of the mixture), in order to create pure metal oxides. The flow rate and composition can be adjusted according to the specific conformations and dimensions of the specific filter used, as known to the skilled person. The metal oxide, for example zinc oxide, can then be collected at the exit of the oxidation process in special containers, or subjected to further physical treatment, and reduced to nanocrystalline size (ie below 10 microns), via a dedicated micro- mill that reduces the size of the crystals.

In the process according to the present invention, the recovery cycle of raw materials can be accomplished in a continuous or in a discontinuous manner, for example in batch. In both cases, the starting material may be stored in mixture, in dedicated pretreatment silos. Preferably, the process according to the present invention is accomplished in a continuous manner.

The residual gases, after condensation of the metal vapor purification from the possibile pollutants, can be split in two different ways, depending on the need.

The pure gases (ie without pollutions and residues) can be re-introucede into the redox chamber, in order to exploit their combustible and redox potential, thus self-powering the treatment cycle. Alternatively, or at least in part, the gas can be fed to a motor / turbine or heat exchanger in order to obtain electricity and heat.

Preferably, the process according to the invention further comprises step x. of sending, at least in part, the gas effluent obtained from the condenser of step vii. inside the chamber of the redox step iii.

Preferably, the process according to the invention further comprises the step xi. of sending, at least in part, the gas effluent obtained from the condenser of step vii. to a motor / turbine or heat exchanger in order to obtain electricity and/or heat.

At the end of the process, a quantity of residue material is contained inside the redox chamber/rotating element which, in the case of WBA from ZnMn accumulators, is composed mostly of manganese (II). This residual material is discharged into a special container to be seal while still hot, using a belt or screw conveyor, and sent to a pelletizer, or similar equipment, after separation of the non-magnetic materials purified by the process itself (via eddy or Foucault current system).

In one aspect, the present invention relates to a plant for the recovery of raw materials from batteries and accumulators of electric charge (WBA) according to the procedure described above, comprising at least the elements connected as follows:
a) a chamber comprising a redox cavity insulated and heatable to temperatures of 600 to 1300°C and comprising at least one inlet for the inert gas and an outlet for gaseous effluents;
b) a conveying line of the gaseous effluents which connects the chamber a) and the pre-filter c) and which can be heated, at least in the part that is closer to the chamber, at a temperature of 500 to 800°C by means of special heaters;
c) a prefilter heated to a temperature of 500 to 800°C and comprising an element capable of retaining solid particles with a diameter greater than 1.2 microns;
d) a condenser connected to the pre-filter c) via a line, which line is heated or insulated so as to maintain the gas passing from c) to d) at a temperature of 500 to 800°C, wherein said condenser is selected from selected from:
   I) a "smelter", capable of condensing the metal contained in the gaseous effluent from the pre-filter c) in liquid form, or
   II) an oxidation filter comprising a filter with a hollow shape, made of a material that is inert and resistant to temperatures above 250°C, comprising an inlet for air or for an oxygen-comprising gaseous mixture, capable of transforming the metal content in the gaseous effluent from the pre-filter c) into metal oxides.

Preferably, in the plant according to the invention the smelter of point d)) is a zinc smelter.

The oxidation filter II) of step d) may comprise quartz fiber, TiO₂, cellulose / glass fiber capable of withstanding temperatures greater than or equal to 250°C or mixtures thereof.

The plant according to the present invention can be pilot-type or having dimensions suitable for processes on an industrial scale. The plant on a pilot scale according to the invention may comprise the following main parts:
a) Redox Chamber It is an insulated chamber made of a refractory material, that is heated, for example radially through induction resistors, wherein a rotor can be inserted, with a square or circular section, equipped with stirring vanes for the optimal treatment of the mass. The chamber is equipped with an inert gas inlet and a gas outlet point to convey mixtures of gases and vapors into the following parts.
b) Output or condensation filters line. It is a line of pipes and valves, maintained at high temperature by adjustable electric heaters, which may comprise several nozzles for gas sampling (for chemical analysis of the process or for the monitoring of process parameters) and a composite filter comprising a pre-filter and a condenser as described above.

The composite filter on line b) is a double filter placed in a single steel body. Its interior can be constituted by an insulating material that surrounds a cylinder of quartz or other suitable material, such as high strength steels or ceramic materials, packed on top of mixed absorbent material (eg. 50% active carbon and 50% TiO₂) and, below, a thimble of glass fiber or quartz fiber (in the case of a filter for oxidation of dusts) or of steel or ceramic material (in the case of the smelter), which acts as a condenser.

Preferably, the apparatus further comprises a line for monitoring environmental impacts and Syngas. The environmental impact monitoring line can detect in a single sampling all the parameters that can be measures in typical analyses of environmental emission sampling. This line can engage orthogonally, about half-way, with line b), fitted with valves at the point of conjunction, and is a heated line, consisting of pipes and filters and suitable for chemical characterization and chemical / physical mixture of Syngas and vapor / gas exiting the redox chamber a). The line is provided with outlet nozzles (for chemical analysis of the process or for the monitoring of process parameters) and a filter (such as active Carbon / Silica Gel / membranes cellulose or fiber glass or quartz for the deposition of any powders or heavy hydrocarbon residues (theoretical)), which allows the purification of syngas (at the end of its chemical characterization and chemical / physical). Such line is divisible and is useful in the study of all emission parameters, as well as for the monitoring of all the characteristics to environmental impact.

Preferably, in the apparatus according to the invention, the chamber a) is equipped with a rotor suitable for mixing, in a continuous or discontinuous manner, the material contained in the chamber.

Preferably, the plant according to the invention comprises, before the redox chamber a), a reducer / homogenizer comprising a apparatus for grinding waste batteries and accumulators (WBA) and a system of magnetic separation of ferromagnetic materials from the rest of the minced mass.

Such apparatus is capable of reducing the volume of the initial waste into a heterogeneous mass from which it is possible to separate immediately the ferromagnetic material. At the end of this step, the mass, which is generally damp, is fed to a specific section (eg closed auger or screw conveyor), a reducing agent and/or, optionally, water, can be sprayed in small quantities, which increases the mechanical properties of the thus obtained mixture (black mass + reducing agent) and has a washing effect (the water eliminates, for example, any amount of bases/acids/ buffers, etc.) This step is important for the homogenization of the whole mass before is introduced into chamber a). The homogenous mass may then be dried by heated tunnel (for example, using hot air produced by the process itself).

## Claims

1. A process for the recovery of raw materials from batteries and accumulators of electric charge (WBA) comprising the steps of:
i. homogenizing a mass ("black mass") comprising non-ferromagnetic residues resulting from the treatment of WBA;
ii. entering the mass obtained in step i. into a redox chamber comprising oxygen in a percentage comprised between 20 and 24 volume / volume of the chamber;
iii. heating the mass in the redox chamber of step ii. at a 600 to 1300°C for 15 to 180 minutes under a stream of inert gas at a minimum flow rate of 1 L / h;
iv. increasing the flow of inert gas to a minimum flow rate of 2 L / h;
v. conveying the gaseous effluents exiting the oxidation chamber through external lines, maintained, at least in the parts that are closer to the oxidation chamber, at 500 to 800°C, optionally by means of dedicated heaters;
vi. conveying the gaseous effluents of step v. to a pre-heated filter, at 500 to 800°C, which comprises an element suitable for retaining solid particles with a diameter greater than 1.2 micron;
vii. conveying the gaseous effluents exiting the pre-filter of passage vi. to a condensing element selected from: I) a "smelter", to obtain a metal in liquid form, or II) an oxidation filter comprising a filter with a hollow shape, made of a material that is inert and resistant to temperatures above 250°C, maintained under a stream of air or of a mixture of air and oxygen, wherein oxygen is 20 to 40% volume/volume, obtaining metal oxides in solid form;
viii. conveying the material obtained in step vii. (liquid metal in the case of the smelter of point I, metal oxides in the case of the filter of point II) to an appropriate container, and
ix. downloading the solid residue in the redox chamber after the removal of the gaseous effluents of step v.

2. The process according to claim 1 wherein the "black mass" of passage i. is obtained by grinding RPA and separatiing the ferromagnetic material therein through a magnetic separator.

3. The method according to one of the preceding claims, wherein in step i. is added to the mass a reducing agent selected from carbon coke, CO (gas), graphite or mixtures thereof.

4. The process according to one of the preceding claims wherein the mass obtained in step i. is inserted inside a rotating element included in the redox chamber.

5. The process according to one of the preceding claims wherein the pre-filter element of passage vi. comprises at least one of activated carbon, diatomaceous earth, silica gel or mixtures thereof.

6. The method of one of the preceding claims, further comprising the step x. of recirculating, at least in part, the gaseous effluents obtained from the condenser of step vii. to the redox chamber of step iii.

7. The method of one of the preceding claims, further comprising the step xi. of directing, at least in part, the gas effluent obtained from the condenser of step vii. to a motor / turbine or heat exchanger in order to obtain electricity and/or heat.

8. The process according to one of the preceding claims wherein the element recovered in the form of metal or oxides in step vii. is Zn.

9. An apparatus for the recovery of raw materials from batteries and accumulators of electric charge (WBA) according to the method of one of the preceding claims, comprising at least the elements connected as follows:
a) a chamber comprising a redox cavity insulated and heatable to 600 to 1300°C and comprising at least one inlet for the inert gas and an outlet for gaseous effluents;
b) a line for conveying the gaseous effluents, which connects chamber a) and the pre-filter c) and which may be optionally heated, at least in the portion closer to chamber a), at 500 to 800°C by means of suitable heaters;
c) a prefilter heatable at 500 to 800°C and comprising an element capable of retaining solid particles with a diameter greater than 1.2 micron;
d) a condenser connected to the pre-filter c) through a line, heated or insulated so as to maintain the gas passing between c) and d) at 500 to 800°C, wherein said capacitor is selected from:
I) a "smelter", suitable to condense the metal contained in the gaseous effluent from the pre-filter c) in metallic liquid form, or
II) a oxidation filter comprising a filter with hollow shape in a inert material that is resistant to temperatures above 250°C, such filter comprising an inlet for air or for a gas mixture comprising oxygen suitable to transform the metal element in the gaseous effluent from the pre-filter c) into metal oxides.

10. The apparatus of claim 9 wherein chamber a) is equipped with a rotating element suitable for mixing, in a continuous or discontinuous manner, the material contained in the chamber.

11. The apparatus according to one of claims 9 and 10, further comprising at least one line, grafted on the line b), for monitoring the gaseous effluents.

12. The apparatus according to one of claims 9-11 comprising, before the redox chamber a), a reduction gear/homogenizer comprising an apparatus for grinding waste batteries and accumulators (WBA) and a system of magnetic separation of the ferromagnetic materials in the ground WBA from the rest of the ground mass.
